**Europäisches Patentamt**

**European Patent Office**

**Office européen des brevets**

(11) Veröffentlichungsnummer: **0 058 342**
**A1**

(12) **EUROPÄISCHE PATENTANMELDUNG**

(21) Anmeldenummer: **82100753.1**

(22) Anmeldetag: **03.02.82**

(51) Int. Cl.³: **G 21 C 17/12**

(30) Priorität: **13.02.81 DE 3105256**

(43) Veröffentlichungstag der Anmeldung:
**25.08.82 Patentblatt 82/34**

(84) Benannte Vertragsstaaten:
**BE FR GB IT NL**

(71) Anmelder: **BROWN, BOVERI & CIE Aktiengesellschaft**
**Kallstadter Strasse 1**
**D-6800 Mannheim 31(DE)**

(72) Erfinder: **Strietzel, Rainer**
**Im Schnepfengrund 8**
**D-6900 Heidelberg 1(DE)**

(74) Vertreter: **Kempe, Wolfgang, Dr. et al,**
**c/o BROWN, BOVERI & CIE AG Kallstadter Strasse 1**
**D-6800 Mannheim-Käfertal(DE)**

(54) **Verfahren und Vorrichtung zur Bestimmung der Eintauchtiefe von Corestäben.**

(57) Die Erfindung bezieht sich auf ein Verfahren zur Bestimmung der Eintauchtiefe eines Corestabes, wie er in kerntechnischen Anlagen zum Einsatz kommt. Bei dem erfindungsgemäßen Verfahren wird wenigstens eine sich mit der Eintauchtiefe des Corestabes ändernde Induktivität erzeugt. Mit deren Hilfe wird ein meßbares der augenblicklichen Stellung des Corestabes proportionales, temperaturunabhängiges Spannungssignal und/oder Frequenzsignal erstellt.

Für die Durchführung des Verfahrens wird eine Vorrichtung verwendet, die mindestens ein Meßspule (1) und wenigstens ein die Induktivität der Meßspule (1) in Abhängigkeit von der Eintauchtiefe des Corestabes änderndes Bauelement (2) aufweist. Die Meßspule (1) ist zur Erfassung der Eintauchtiefe an eine Auswerteschaltung (4) angeschlossen, die zusätzlich mit einem den Einfluß der Temperatur auf die Induktivität der Meßspule (1) erfassenden und die Auswerteschaltung (4) darauf abstimmenden Meßfühler (3) verbunden ist.

Fig. 1

EP 0 058 342 A1

B R O W N ,   B O V E R I   &   C I E     AKTIENGESELLSCHAFT

Mannheim                              11.02.1981

ZPT/P1-Kr/Sd                     Mp.-Nr. 505/81

# Verfahren und Vorrichtung zur Bestimmung der Eintauchtiefe von Corestäben

Die Erfindung bezieht sich auf ein Verfahren zur Ermittlung der Eintauchtiefe eines Corestabes von kerntechnischen Anlagen sowie auf eine Vorrichtung zur Durchführung des Verfahrens.

Um in den Zustand einer kerntechnischen Anlage als Regelstrecke verändernd eingreifen zu können, sind hierfür Corestäbe insbesondere Regel- und Absorberstäbe vorgesehen. Es handelt sich hierbei um Stäbe aus einer neutronenabsorbierenden Substanz. Die Stäbe sind beweglich angeordnet und können mittels einer Betätigungsvorrichtung in die kerntechnische Anlage eingefahren werden. Die Regelstäbe dienen der eigentlichen Regelung der kerntechnischen Anlage und werden im Gegensatz zu den Absorberstäben durch den Regler gesteuert. Die Anzahl der Regelstäbe richtet sich nach der Größe der kerntechnischen Anlage. Bei manchen Anlagen ist sogar ein Regelstab vollständig ausreichend. Die Bewegungsgeschwindigkeit der Regelstäbe muß im Vergleich zur Höchstgeschwindigkeit der Absorberstäbe groß sein. Um einen einfachen Zusammenhang zwischen der Regelstabposition und der Reaktivität zu erhalten, sollten die Regelstäbe stets soweit in den Reaktor eingefahren sein, daß sie sich innerhalb eines linearen Wirkungsbereich befinden. Aus diesem Grund darf die Wirksamkeit der Regelstäbe nur wenig von der Stellung der Absorberstäbe abhängig sein. Die meisten in einer kerntechtechnischen Anlage vorgesehenen Absorberstäbe dienen im Gegensatz zu den Regelstäben als sogenannte Ausgleichsstäbe. Die Absorberstäbe sind über den Querschnitt der kerntechnischen Anlage so verteilt, daß sie sich gegenseitig möglichst wenig beeinflussen. Die durch die Absorbtionsstäbe insgesamt bewirkte Reaktivitätsverminderung soll die im kalten, unvergifteten und ungebrauchten Reaktor, eventuell ohne ein stark absorbierendes Kühlmittel vorhandene Überschußreaktivität um mindestens $\mathcal{F}\mathcal{S} = 0,02$ übertreffen, damit der Reaktor mit den Absorberstäben jederzeit sicher abgestellt werden kann. Andererseits soll die höchst zulässige Wirksamkeit eines einzelnen Absorberstabes von $\mathcal{F}\mathcal{S} = 0,006$ möglichst nicht überschritten werden. Die Höchstgeschwindigkeit eines Absorberstabes braucht im Bereich maximaler Wirksamkeit nicht größer als etwa ein fünftel der Geschwindigkeit eines Regelstabes zu sein, da kleine, aber schnelle Reaktivitätsänderungen mit dem Regelstab ausgeführt und für große Änderungen mehrere Absorberstäbe zusammen herangezogen werden. Um mit den Regel- und Absorberstäben eine optimale und allen Sicherheitsbedingungen genügende Regelung des Reaktors gewährleisten zu können, muß in jedem Augenblick eine genaue Aussage über die jeweilige Eintauchtiefe eines jeden Corestabes insbesondere eines jeden Absorber- und Regelstabes erfolgen können.

Bei einer bereits bekannt gewordenen kerntechnischen Anlage erfolgt die Stellungsanzeige der Corestäbe unter Zuhilfenahme von Reedkontaktleisten mit vertikal angeordneten Kontakten. Die Meßunsicherheit und Reproduzierbarkeit liegt bei dieser Anlage etwas unter 40 mm.

Gegen diese im Augenblick noch verwendete Einrichtung werden neuerdings aus sicherheitstechnischen Gründen Einwände vorgebracht und eine größere Sicherheit gefordert, wobei die zulässige Meßungenauigkeit kleiner als 20 mm sein soll.

Der Erfindung liegt daher die Aufgabe zugrunde, ein Verfahren und eine Vorrichtung zu schaffen, mit der die Stellungsanzeige von Corestäben mit einer größeren Genauigkeit angegeben werden kann, als es bis jetzt üblich ist. Das Verfahren soll einfach in der Anwendung sein und die hierfür verwendete Vorrichtung soll mit einem Minimum an schalttechnischen Einrichtungen aufgebaut werden können.

Die Aufgabe wird dadurch gelöst, daß wenigstens eine sich mit der Eintauchtiefe eines jeden Corestabes ändernde Induktivität erzeugt wird, mit der jeweils ein meßbares, der augenblicklichen Stellung des Corestabes proportionales Spannungs- und/oder Frequenzsignal erstellt wird.

Durch die Erfassung der jeweiligen Stabstellung unter Zuhilfenahme einer sich mit der Eintauchtiefe ändernden Induktivität kann bei jeder Änderung der Eintauchtiefe die genaue Stabstellung angegeben werden.

Zur Durchführung des Verfahrens wird eine Vorrichtung verwendet, die dadurch gekennzeichnet ist, daß eine Meßspule und wenigstens ein die Induktivität der Meßspule in Abhängigkeit von der Eintauchtiefe des Corestabes änderndes Bauelement vorgesehen sind, daß die Spule zur Erfassung der Eintauchtiefe an eine Auswerteschaltung angeschlossen ist, die zusätzlich mit einem den Einfluß der Temperatur auf die Induktivität der Meßspule erfassenden und die Auswerteschaltung darauf abstimmenden Meßfühler verbunden ist.

0058342

In vorteilhafterweise ist die Meßspule innerhalb eines zum Corestabantrieb gehörenden Schutzrohres angeordnet. Die Meßspule ist auf einen Keramikkern aufgewickelt und im Bereich der Reedkontakte installiert, die sich ebenfalls in diesem Schutzrohr befinden.

Das die Induktivität dieser Meßspule ändernde Bauelement ist aus einem ferromagnetischen Material hergestellt. Erfindungsgemäß ist die mit dem Corestabantrieb verbundene Schubstange aus einem ferromagnetischen Material gefertigt und dient zur Änderung der Induktivität der Meßspule.

Bei der Betätigung des Corestabes wird die Schubstange zusammen mit dem Betätigungskolben über das Schutzrohr gefahren, innerhalb dessen die Meßspule angeordnet ist. Die Schubstange ist so ausgebildet, daß sie das Schutzrohr hüllenartig umgeben kann. Insbesondere ist die erfindungsgemäße Vorrichtung so ausgebildet, daß in jedem Fall das Teilstück des Schutzrohres, dessen Innenbereich die Meßspule enthält, bei vollständig ausgefahrenem Corestab vollständig von der Schubstange umgeben ist. Die Länge der Schubstange ist so gewählt, daß sie die Meßspule über die gesamte Länge umschließen kann.

Beim Einfahren des Corestabes wird die Schubstange aus dem Bereich der Meßspule wegbewegt, wobei es zu einer Änderung der Induktivität der Meßspule kommt.

Der Durchmesser der Schubstange ist so groß gewählt, daß ein problemloses Verfahren derselben über das Schutzrohr möglich ist. Der Teil der Auswerteschaltung, an den die elektrischen Anschlüsse der Meßspule angeschaltet sind, ist als Schwingkreis ausgebildet. Der Schwingkreis wird durch die Meßspule selbst und einen ihr parallel geschalteten Kondensator gebildet. Diesem Schwingkreis wird eine von einem Generator erzeugte Wechselspannung über einen Widerstand zugeführt und die          der an ihm anstehenden Spannung gemessen. Der den Temperatureinfluß auf die Meßspule erfassende Meßfühler ist bei dieser Ausführungsform als Thermoelement ausgebildet, das den Wechselspannungsgenerator so beeinflußt, daß sich die          am Schwingkreis nur bei unterschiedlichen Corestabeintauchtiefen verändert und von Temperaturänderungen unbeeinflußt bleibt. Wird die Induktivität der Meßspule beim Verfahren des Corestabes geändert, so bewirkt diese Änderung eine Änderung der am Schwingkreis auftretenden Spannung um einen gewissen Wert. Die Auswertschaltung, insbesondere der Schwingkreis muß so angepaßt werden, daß jede von der Resonanzspannung abweichende Spannung einer bestimmten Eintauchtiefe des Corestabes proportional ist. In vorteilhafter Weise ist der Schwingkreis so ausgebildet, daß die Resonanzspannung $U_R$ nur dann anliegt, wenn der Stab vollständig aus dem Core ausgefahren ist.

Bei einer weiteren Ausführungsform ist die Auswerteschaltung als Brückenschaltung ausgebildet. Hierbei kommen zwei im Schutzrohr untergebrachte, gleichartige Spulen zur Anwendung. Die Induktivität der einen Spule wird von der Position des Corestabantriebes und von der Temperatur verändert. Die Position der zweiten Spule wird nur von der Temperatur beeinflußt, da sie innerhalb eines aus ferromagnetischem Material gefertigten Gehäuse eingekapselt ist. Das Zusammenschalten der beiden Spulen mit zwei Widerständen zu einer Brückenschaltung bewirkt, daß bei einer Wechselspannungseinspeisung durch einen Generator keine Spannungsänderung durch einen Temperatureinfluß an den Meßklemmen auftritt, sondern nur bei einer Änderung der Stabstellung.

Bei einer dritten Ausführungsform der Erfindung wird die Auswerteschaltung durch zwei aktive Schwingkreise gebildet. Bei dieser Ausführungsform sind wieder zwei Spulen innerhalb des Schutzrohres angeordnet, wobei eine wiederum durch ein ferromagnetisches Material gekapselt ist. Die Spulen sind so an die Auswerteschaltung angeschlossen, daß beide Spulen jeweils das frequenzverändernde Glied eines Oszillators darstellen. Die Induktivität wird bei der ersten Spule durch die Position des Stabantriebes und den Temperatureinfluß bestimmt. Bei der zweiten Spule erfolgt die Änderung der Induktivität ausschließlich

0058342

durch den Einfluß der sich ändernden Temperatur. Die Auswerteschaltung weist zusätzlich einen Differenzbildner auf, dem die in den Oszillatoren erzeugten Wechselspannungen zugeführt werden. Die Frequenzdifferenz der Wechselspannungen ist weitestgehend von Temperatureinflüssen unabhängig. Sie stellt ein Maß für die Induktivitätsänderung der Meßspule dar, verursacht durch die Positionsänderungen des betreffenden Corestabes.

Die erfindungsgemäße Vorrichtung erlaubt die Messung von langen Wegen und verfügt über eine geringe Meßungenauigkeit. Vorteilhafterweise bestehen die Spulen aus Materialien, die eine Temperaturbeständigkeit bis mindestens 300$^{o}$C aufweisen, wodurch eine lange Lebensdauer der Vorrichtung garantiert wird. Ferner ist die Vorrichtung gegen Strahlung beständig und kann auch einem hohen Druck Widerstand leisten. Da sie nur wenige Bauteile umfaßt, weist sie eine sehr hohe Zuverlässigkeit auf. Aufgrund ihres einfachen Aufbaues ist die insbesondere für kerntechnische Anlagen geforderte Funktionsprüfung und Instandhaltung auf einfache Weise möglich.

Die Erfindung wird nachfolgend anhand der Zeichnungen erläutert.

Es zeigen:

Fig. 1      eine schematische Darstellung der Antriebsvorrichtung eines Corestabes mit der erfindungsgemäßen Vorrichtung.

Fig. 2      eine für die Stellungsanzeige verwendete Auswerteschaltung,

Fig. 3      den Spannungsverlauf dieser Auswerteschaltung im Resonanzfall und bei sich ändernder Induktivität,

Fig. 4      eine zweite Ausführungsform der Auswerteschaltung,

Fig. 5      eine Variante der in Fig. 4 gezeigten Schaltung,

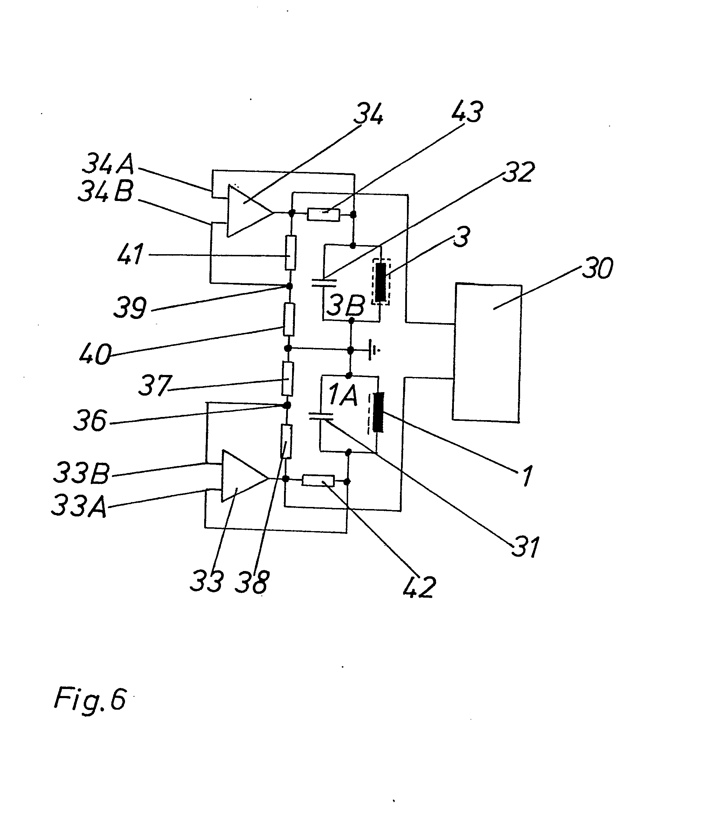

Fig. 6      eine Auswerteschaltung mit zwei aktiven Schwingkreisen.

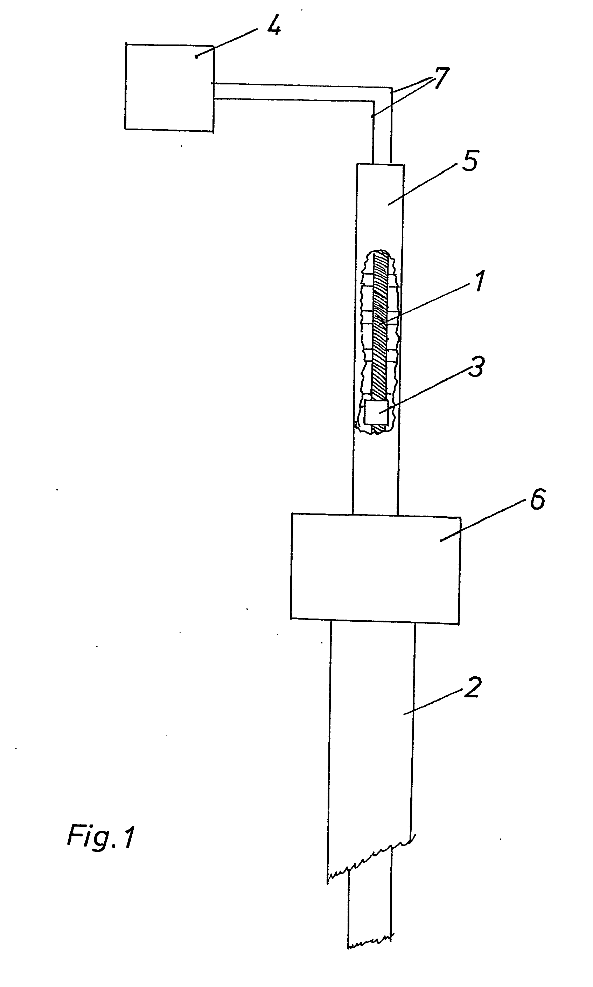

In Fig. 1 ist ein Ausschnitt aus der Antriebsvorrichtung eines Corestabes dargestellt, in die die erfindungsgemäße Vorrichtung eingebaut ist. Wie Fig. 1 zu entnehmen ist, weist die erfindungsgemäße Vorrichtung eine Meßspule 1, eine Schubstange aus ferromagnetischem Material 2, einen Meßfühler 3 und eine Auswerteschaltung 4 auf.
Der schematisch dargestellte Ausschnitt der Antriebsvorrichtung zeigt ein Schutzrohr 5, das bereichsweise von einem Betätigungskolben 6 umgeben ist. An der Unterseite des Betätigungskolbens 6 ist die aus einem ferromagnetischen Material hergestellte Schubstange 2 befestigt. Wie Fig. 1 zeigt, ist die Meßspule 1 innerhalb des Schutzrohres 5 angeordnet. Das gleiche gilt für den Meßfühler 3. Dieser hat die Aufgabe, den Einfluß der Temperatur auf die Induktivität der Meßspule 1 zu kompensieren. Für die Temperaturkompensation kann ein als Thermoelement ausgebildeter Meßfühler verwendet werden. Als Meßfühler ist ebenfalls eine mit ferromagnetischem Material gekapselte Spule geeignet. Welche Art von Meß- insbesondere Temperaturfühler verwendet wird, richtet sich nach der Auswerteschaltung 4, mit der die jeweilige Corestabstellung ermittelt wird. Die im Schutzrohr 5 angeordnete Meßspule 1 und der Meßfühler 3 sind über elektrische Leitungen 7 an die in Fig. 1 mit dem Bezugszeichen 4 versehene Auswerteschaltung angeschlossen.

Das zu der Antriebsvorrichtung des Corestabes gehörende Schutzrohr 5 ist fest installiert und kann nicht bewegt werden. Die Schubstange 2 und der mit ihr verbundene Betätigungskolben 6 umgeben das Schutzrohr 5 hüllenartig und können durch Aktivierung des Betätigungskolben 6 längs dieses Schutzrohres 5 bewegt werden. Insbesondere besteht die Möglichkeit den Betätigungskolben 6 soweit zu verfahren, daß die Schubstange 2 den Bereich des Schutzrohres 5, in dessen Innerem die Meßspule 1 angeordnet ist, vollständig und über die gesamte Länge umschließt. Die Länge der Schubstange 2 ist in entsprechender Weise gewählt, so daß sie mindestens ebensolang wie die Meßspule 1 ist. Die Vorrichtung ist so ausgebildet, daß gerade bei vollständiger Umhüllung der Meßspule 1 durch die Schubstange 2 der Corestab vollständig aus dem Core ausgefahren ist. Der Durchmesser der Schubstange 2 ist so gewählt, daß dieser geringfügig größer ist als der Durchmesser des Schutzrohres. Damit kann die Schubstange unter Zuhilfenahme des Betätigungskolbens 6 problemlos entlang des Schutzrohres 5 bewegt werden.

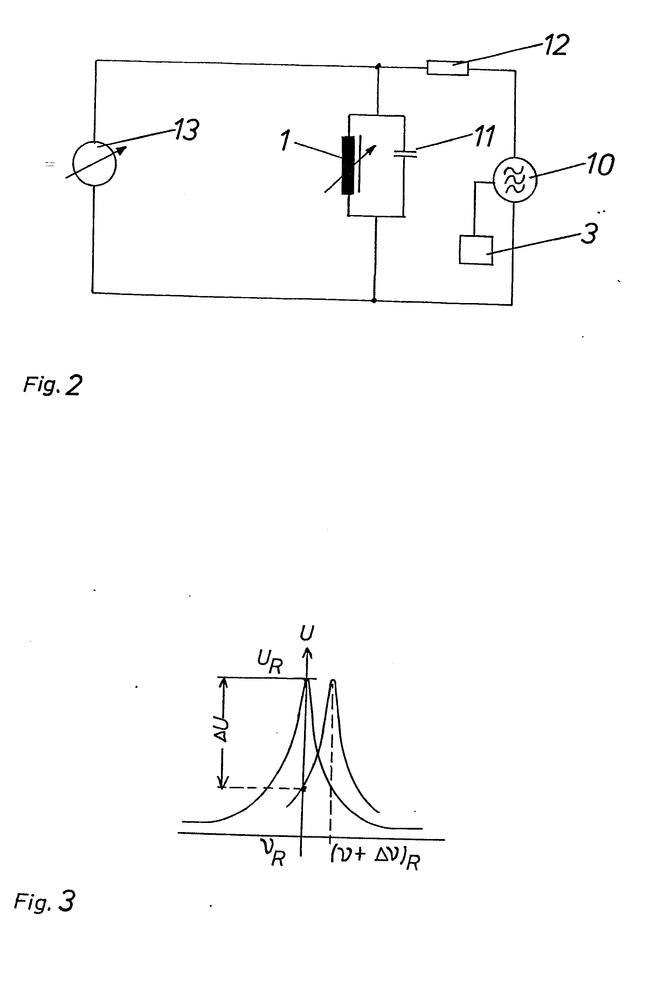

Eine für die Ermittlung der jeweiligen Stabstellung verwendete Auswerteschaltung ist in Fig. 2 dargestellt. Es handelt sich hierbei um einen Schwingkreis der durch einen Wechselspannungsgenerator 10 erregt wird. Der Schwingkreis wird durch die Meßspule 1 und einen ihr parallel geschalteten Kondensator 11 gebildet. Zwischen den Wechselspannungsgenerator 10 und den Schwingkreis 1 und 11 ist ein ohmscher Widerstand 12 geschaltet. Bei Verwendung eines Schwingkreises als Auswerteschaltung 4 kann zur Erfassung des Temperatureinflusses auf die Meßspule 1 ein Thermoelement 3 als Meßfühler verwendet werden. Das Thermoelement 3 ist mit dem Wechselspannungsgenerator 10 verbunden und beeinflußt dessen Ausgangsfrequenz in Abhängigkeit der jeweiligen Temperatur. Dem Schwingkreis 1 und 11 ist ein Spannungsmesser 13 parallel geschaltet. Das hier beschriebene Ausführungsbeispiel der erfindungsgemäßen Vorrichtung ist nun so ausgelegt, daß bei einem vollständig aus dem Core ausgefahrenen Corestab die Induktivität der Meßspule 1 einen solchen Wert aufweist, daß innerhalb des Schwingkreises 1 und 11 Resonanz auftritt. Die Schubstange 2 ist dann derart über dem Schutzrohr angeordnet, daß sie die im Inneren derselben angeordnete Meßspule 1 über die gesamte Länge umhüllt. Der Spannungsmesser 13 am Schwingkreis 1 und 11 zeigt eine mit $U_R$ gekennzeichnete Spannung an. Die zu dieser Spannung $U_R$ gehörende Eintauchtiefe A hat den Wert Null. Wird der Corestab durch Absenken der Schubstange 2 mittels des Betätigungskolbens 6 in das Core eingefahren, so umhüllt die Schubstange 2 die Meßspule 1 nur noch teilweise. Da, wie bereits erwähnt, die Schubstange 2 aus einem ferromagnetischen Material gefertigt ist, wird dadurch die Induktivität der Meßspule verändert. Diese Änderung bewirkt innerhalb des Schwingkreises eine Änderung der angezeigten Spannung um einen Wert Delta U. Der neue vom Spannungsmesser 13 angezeigte Spannungsverlauf wird in einem in Fig. 3 dargestellten Diagramm gezeigt. Der Spannungsmesser 13 zeigt jetzt einen neuen, kleineren Spannungswert $U_1$ an, wobei $U_1 = U_R$ - Delta U ist. Der Spannungswert $U_1$ entspricht also der um den Wert Delta U verringerten Resonanzfrequenz $U_R$. Dieser Spannungswert $U_1$ ist einem ganz bestimmten Wert der Eintauchtiefe A des Corestabes zugeordnet. Bei der erfindungsgemäßen Vorrichtung gehört zu jeder Corestabstellung ein ganz bestimmter Spannungswert. Diese Zuordnung erfolgt beim Einbau der Vorrichtung. Hierbei können während eines einmaligen, schrittweisen Einfahrens beziehungsweise Ausfahrens des Corestabes die jeweils einander äquivalenten Größen ermittelt werden. Die Reproduzierbarkeit der einmal mit der Vorrichtung ermittelten Meßgrößen ist so genau, daß auf der Anzeige des Spannungsmessers (hier nicht dargestellt) den aufgetragenen Spannungswerten die dazu proportionalen Eintauchtiefen zugeordnet und nebenstehend aufgetragen werden können. Damit kann bei jedem späteren Ein- und Ausfahren des Corestabes dessen jeweilige, augenblickliche Eintauchtiefe direkt abgelesen werden.

Selbstverständlich können die beim Einbau ermittelten und zueinander proportionalen Werte von Spannung und Eintauchtiefe auch in den Speicher, zum Beispiel eines Mikroprozessors eingelesen werden. Dieser kann dann so geschaltet werden, daß seinem Eingang bei allen weiteren Betätigungen des Corestabes das jeweils aufgrund der Änderung der Induktivität der Meßspule erzeugte Spannungssignal zugeführt wird. Der Mikroprozessor ordnet dann dem Spannungssignal, das an seinem Eingang ansteht die zugehörige Eintauchtiefe zu. An seinem Ausgang gibt er verzögerungsfrei ein entsprechendes Signal an eine Anzeigevorrichtung, an der dann die jeweilige augenblickliche Eintauchtiefe A des Corestabes abgelesen werden kann. Eine zusätzliche Anzeige des jeweiligen Spannungswertes ist selbstverständlich hierbei auch noch möglich.

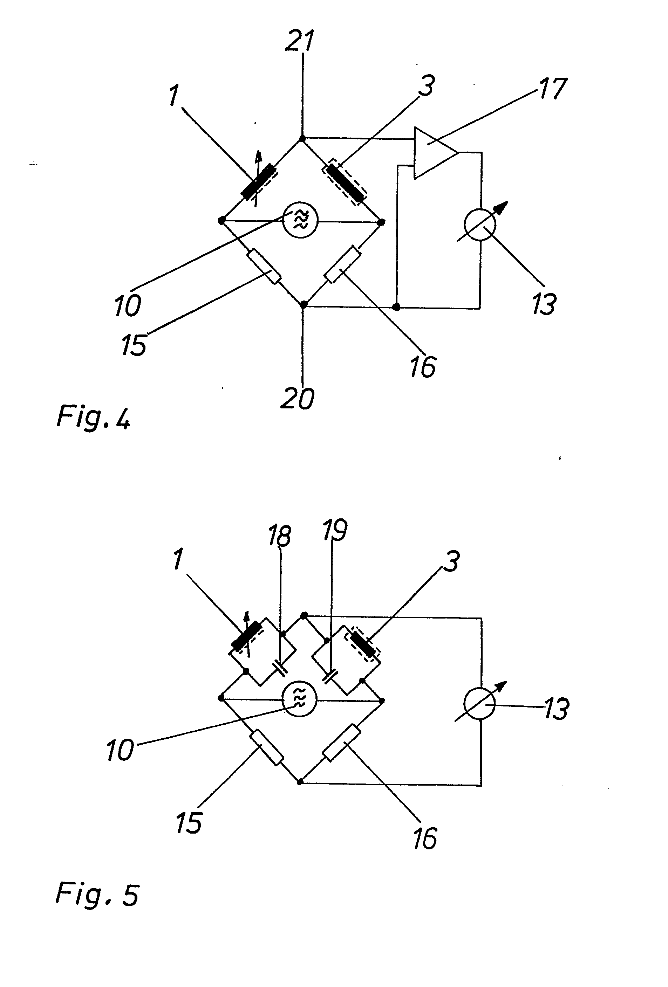

Fig. 4 zeigt eine weitere Auswerteschaltung 4, die zur Ermittlung der Eintauchtiefe A verwendet und an die erfindungsgemäße Vorrichtung angeschlossen werden kann. Die erfindungsgemäße Vorrichtung ist auch bei Verwendung dieser Auswerteschaltung 4 im wesentlichen so ausgebildet, wie es in Fig. 1 gezeigt und in der dazugehörigen Beschreibung erläutert ist. Bei der hier beschriebenen Ausführungsform ist lediglich der Meßfühler 3 als ferromagnetisch gekapselte Spule ausgebildet, die ebenso wie die Meßspule 1 in das Schutzrohr 5 eingesetzt ist. Bei der in Fig. 4 gezeigten Auswerteschaltung handelt es sich im wesentlichen um eine Induktivitätsmeßbrücke. In den ersten Brückenzweig ist die Meßspule und die ferromagnetisch gekapselte Spule 3 eingeschaltet. Der zweite Brückenzweig enthält zwei ohmsche Widerstände 15 und 16. Ein Wechselspannungsgenerator 10 ist in einen diagonalen Brückenzweig eingebaut. Die beiden Anschlußpunkte 20 und 21 der Induktivitätsmeßbrücke sind an den ersten und zweiten Eingang eines Spannungsverstärkers 17 angeschlossen. Der Anschlußpunkt 20 und der Ausgang des Spannungsverstärkers 17 sind mit einem Spannungsmesser 13 verbunden. In entsprechender Weise wird auch hierbei wie bei der in Fig.2 gezeigten Auswerteschaltung 4 jedem angezeigten Spannungssignal einmal die dazugehörige Eintauchtiefe A zugeordnet. Damit ist bei allen weiteren Betätigungen des Corestabes eine einfache Feststellung der jeweiligen Eintauchtiefe A desselben möglich.

Fig. 5 zeigt eine Variante der in Fig. 4 gezeigten Auswerteschaltung 4. Diese ist im wesentlichen so ausgebildet, wie die in Fig. 4 gezeigte Ausführungsform. Insbesondere ist hierbei der Meßspule 1 und der ferromagnetisch gekapselten Spule 3 jeweils ein Kondensator 18 beziehungsweise 19 parallel geschaltet. Bei diesem Ausführungsbeispiel kann auf einen Spannungsverstärker verzichtet werden, da bei gleichen Induktivitätsänderungen größere Ausgangsspannungen auftreten als es bei der in Fig. 4 dargestellten Auswerteschaltung der Fall ist.

Eine weitere Ausführungsform einer Auswerteschaltung 4 zeigt Figt. 6 . Der Aufbau der erfindungsgemäßen Vorrichtung entspricht hierbei ebenfalls der in Fig. 1 gezeigten Ausführungsform. Der Meßfühler 3 ist auch hierbei als ferromagnetisch gekapselte Spule ausgebildet und innerhalb des Schutzrohres 5 angeordnet. Die hier gezeigte Auswerteschaltung wird im wesentlichen durch zwei aktive Schwingkreise gebildet, deren Ausgangssignale einem Frequenzdifferenzbildner 30 zugeführt werden.

Die Auswerteschaltung ist so ausgebildet, daß die Meßspule 1 dem ersten Schwingkreis und die ferromagnetisch gekapselte Meßspule 30 dem zweiten Schwingkreis zugeordnet ist. Jeweils ein elektrischer Anschluß der beiden Parallelschaltungen 1 A und 3 B ist an Masse angeschossen. Der zweite elektrische Anschluß der beiden Parallelschaltungen 1 A und 3 B steht mit dem ersten Eingang 33 A beziehungsweise 34 A eines Verstärkers 33 beziehungsweise 34 in Verbindung. Der zweite Eingang 33 B des Verstärkers 33 ist an einen Summenpunkt 36 angeschlossen. Dieser ist zum einen über den ohmschen Widerstand 37 mit Masse und über einen ohmschen Widerstand 38 mit dem Eingang des Verstärkers 33 verbunden. Der zweite Eingang 34 B des Verstärkers 34 ist ebenfalls an einen Summenpunkt 39 angeschlossen. Dieser steht zum einen über einen ohmschen Widerstand 40 mit Masse und über den ohmschen Widerstand 41 mit dem Ausgang des Verstärkers 34 in Verbindung. Der Ausgang des Verstärkers 33 ist zusätzlich über einen ohmschen Widerstand 42 mit dem ersten Eingang 33 A dieses Verstärkers 33 und dem ersten elektrischen Anschluß des Parallalkreises 1 A verbunden. Der Ausgang des Verstärkers 34 ist über einen ohmschen Widerstand 43 ebenfalls mit dem ersten Eingang 34 A des Verstärkers 34 und zusätzlich mit dem ersten Anschluß des zweiten Parallelkreises 3 B verbunden. Ferner werden die beiden an den Ausgängen der Verstärker 33 und 34 anstehenden Wechselspannungssignale dem Frequenzdifferenzbildner 30 direkt zugeführt. Die im Differenzbildner 30 erzeugte Frequenzdifferenz ist weitestgehend von Temperatureinflüssen unabhängig. Der Wert ändert sich nur noch mit der Eintauchtiefe des Corestabes. Durch entsprechende Zuordnung der jeweiligen Eintauchtiefe zu der im Frequenzdifferenzbildner 30 erzeugten Frequenzdifferenz kann mit der erfindungsgemäßen Vorrichtung bei jeder Betätigung des Corestabes eine genaue Aussage über dessen Eintauchtiefe A erfolgen.

Die mit der erfindungsgemäßen Vorrichtung verbindbaren Auswerteschaltungen sind nicht auf die hier beschriebenen Beispiele beschränkt. Selbstverständlich können auch andere Schaltungsvarianten zur Ermittlung von Spannungsbeziehungsweise Frequenzsignalen verwendet werden, die den Änderungen der Induktivität der Meßspule proportional sind. Die erfindungsgemäße Vorrichtung ist auch nicht auf die spezielle Spulenanordnung und die spezielle Ausbildung des ferromagnetischen Bauteiles 2 als Schubstange beschränkt.

Ansprüche

1. Verfahren zur Bestimmung der Eintauchtiefe eines Corestabes einer kerntechnischen Anlage, dadurch gekennzeichnet, daß wenigstens eine sich mit der Eintauchtiefe des Corestabes ändernde Induktivität erzeugt wird, mit der jeweils ein meßbares der augenblicklichen Stellung des Corestabes proportionales, temperaturunabhängiges Spannungssignal und/oder Frequenzsignal erstellt wird.

2. Vorrichtung zur Durchführung des Verfahrens nach Anspruch 1, dadurch gekennzeichnet, daß mindestens eine Meßspule (1) und wenigstens ein die Induktivität der Meßspule (1) in Abhängigkeit von der Eintauchtiefe des Corestabes änderndes Bauelement (2) vorgesehen sind, daß die Meßspule (1) zur Erfassung der Eintauchtiefe an eine Auswerteschaltung (4) angeschlossen ist , die zusätzlich mit einem den Einfluß der Temperatur auf die Induktivität der Meßspule (1) erfassenden und die Auswerteschaltung (4) darauf abstimmenden Meßfühler (3) verbunden ist.

3. Vorrichtung nach Anspruch 2, dadurch gekennzeichnet, daß die Meßspule (1) fest installiert ist.

4. Vorrichtung nach einem der Ansprüche 2 oder 3, dadurch gekennzeichnet, daß das Bauelement (2) beweglich angeordnet ist.

5. Vorrichtung nach einem der Ansprüche 2 bis 4, dadurch gekennzeichnet, daß das Bauelement (2) über die gesamte Länge der Meßspule (1) verfahrbar angeordnet ist.

6. Vorrichtung nach einem der Ansprüche 2 bis 5, dadurch gekennzeichnet, daß die Meßspule (1) innerhalb eines zur Antriebsvorrichtung gehörenden Schutzrohres (5) angeordnet ist.

7. Vorrichtung nach einem der Ansprüche 2 bis 6, dadurch gekennzeichnet, daß die Meßspule (1) auf einen Keramikkern aufgewickelt ist.

8. Vorrichtung nach einem der Ansprüche 2 bis 7, dadurch gekennzeichnet, daß das Bauelement (2) aus einem ferrtischen Material hergestellt ist.

9. Vorrichtung nach einem der Ansprüche 2 bis 8, dadurch gekennzeichnet, daß das Bauelement (2) als Schubstange der Antriebsvorrichtung des Corestabes ausgebildet ist.

10. Vorrichtung nach einem der Ansprüche 2 bis 9, dadurch gekennzeichnet, daß die Schubstange (2) mindestens über den die Meßspule (1) umfassenden Bereich des Schutzrohres (5) verfahrbar angeordnet ist.

11. Vorrichtung nach einem der Ansprüche 2 bis 10, dadurch gekennzeichnet, daß der Durchmesser der Schubstange (2) größer ist als der Durchmesser des Schutzrohres (5).

12. Vorrichtung nach einem der Ansprüche 2 bis 11, dadurch gekennzeichnet, daß die Auswerteschaltung (4) ein Schwingkreis ist.

13. Vorrichtung nach einem der Ansprüche 2 bis 12, dadurch gekennzeichnet, daß der Meßfühler (3) als Thermoelement ausgebildet ist.

14. Vorrichtung nach einem der Ansprüche 2 bis 12 , dadurch gekennzeichnet, daß der Meßfühler (3) als ferromagnetisch gekapselte Spule ausgebildet ist.

15. Vorrichtung nach einem der Ansprüche 2 bis 14, dadurch gekennzeichnet, daß die Auswerteschaltung (4) einen Schwingkreis aufweist, der durch die Meßspule (1) und einen dazu parallel geschalteten Kondensator (11) gebildet ist.

16. Vorrichtung nach einem der Ansprüche 2 bis 11, dadurch gekennzeichnet, daß die Auswerteschaltung (4) als Brückenschaltung ausgebildet ist.

17. Vorrichtung nach Anspruch 16, dadurch gekennzeichnet, daß die Meßspule (1) zusammen mit der ferromagnetisch gekapselten Spule (3) in einen ersten Zweig der Brückenschaltung (4) eingeschaltet ist.

18. Vorrichtung nach einem der Ansprüche 2 bis 11, dadurch gekennzeichnet, daß die Auswerteschaltung (4) aus zwei aktiven Schwingkreisen gebildet ist, deren Ausgangsspannungen einem Frequenzdifferenzbildner (30) zugeführt sind.

19. Vorrichtung nach Anspruch 18, dadurch gekennzeichnet, daß die Meßspule (1) in den ersten aktiven Schwingkreis als ein frequenzbestimmendes Bauteil eingeschaltet ist.

20. Vorrichtung nach einem der Ansprüche 18 und 19, dadurch gekennzeichnet, daß der als ferromagnetisch gekapselte Spule ausgebildete Meßfühler (3) in den zweiten Schwingkreis als frequenzbestimmendes Bauteil eingeschaltet ist.

Fig.1

Fig. 2

Fig. 3

Fig. 4

Fig. 5

Fig.6

# Europäisches Patentamt
## EUROPÄISCHER RECHERCHENBERICHT

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl. 3) |
|---|---|---|---|
| Y | FR-A-2 198 222 (SIEMENS)<br>* Seite 2, Zeilen 8-14; Seite 3, Zeilen 35-40; Seite 4, Zeilen 1-16, 34-39; Abbildung 1 * | 1-4,8 | G 21 C 17/12 |
| | --- | | |
| Y | FR-A-2 075 778 (A.C.E.C.)<br>* Seite 1, Zeilen 1-14; Seite 2, Zeilen 2-6, 11-28; Seite 3, Zeilen 9-20; Abbildungen 1,2 * | 1-5 | |
| | --- | | |
| A | FR-A-2 169 437 (MERLIN GERIN)<br>* Seite 4, Zeilen 37-40; Seite 5, Zeilen 1-16; Seite 6, Zeilen 28-32; Abbildung 1 * | 1,2 | |
| | --- | | |
| A | BE-A- 831 952 (A.C.E.C.)<br>* Seite 2, Zeilen 1-15, 35-36 * | 1,2 | |
| | --- | | RECHERCHIERTE SACHGEBIETE (Int. Cl. 3) |
| A | TRANSACTIONS A.I.E.E., Band 11, November 1959, Seiten 614-618 R.C. FLOYD et al.: "A rod-position indication system for pressurized reactors" * Seite 614, linke Spalte * | 1,10, 11 | G 21 C 17/12<br>H 01 F 40/00<br>H 01 F 40/02 |
| | --- | | |
| A | FR-A-1 567 270 (LICENTIA PATENT VERWALTUNG)<br>* Seite 2, linke Spalte, letzter Absatz; Abbildung 1 * | 1 | |
| | ----- | | |

Der vorliegende Recherchenbericht wurde für alle Patentansprüche erstellt.

| Recherchenort | Abschlußdatum der Recherche | Prüfer |
|---|---|---|
| DEN HAAG | 17-05-1982 | GIANNI G.L.G. |